# EUROPÄISCHE PATENTANMELDUNG

(11) **EP 1 228 697 A1**
(43) Veröffentlichungstag der Anmeldung: **07.08.2002**
(21) Anmeldenummer: 02001067.4
(22) Anmeldetag: 22.01.2002
(51) Int. Cl.: A23K 1/16, A23K 1/18

(54) **Futtermittel für die Nutztieraufzucht enthaltend Sorbinsäure und Enzyme**

(30) Priorität: 02.02.2001 DE 10105306
(71) Anmelder: Nutrinova Nutrition Specialties & Food Ingredients GmbH, 65929 Frankfurt am Main (DE)
(72) Erfinder: Raczek, Nico, Dr., 65779 Kelkheim (DE)
(74) Vertreter: Schweitzer, Klaus, Dr.

(57) **Zusammenfassung**

Die vorliegende Erfindung betrifft ein Futtermittel mit leistungssteigerndem Effekt, welches Sorbinsäure und mindestens ein Enzym und/oder Enzympräparat enthält. Das Futtermittel kann zur Leistungsförderung in der Nutztieraufzucht eingesetzt werden.

## Beschreibung

Die Erfindung betrifft Futtermittel für die Nutztieraufzucht, welches Sorbinsäure und Enzyme enthält. Ferner betrifft die Erfindung die Verwendung einer Kombination aus Sorbinsäure und Enzymen als leistungsfördernden Zusatz zu Futtermitteln.

Im Bereich der Tierfutter werden häufig Antibiotika als Leistungsförderer verwendet. Die Anwendung von Antibiotika in diesem Bereich steht im Verdacht für Gefahren, welche von resistenten Bakterien ausgehen, die auch die menschliche Gesundheit langfristig gefährden können, verantwortlich zu sein. Daher müssen gesundheitlich weniger bedenkliche Produkte für diesen Einsatzzweck gesucht werden. So werden auch in anderen Bereichen zunehmend physiologisch und epidemiologisch gesundheitlich bedenkliche oder aber für die Umwelt schädliche Substanzen, wie beispielsweise Antibiotika, formaldehydabspaltende Stoffe, halogenierte Substanzen, u.v.a.m. beispielsweise in Lebensmitteln, Futtermitteln, Haustierfutter, Silagen, Trester, oder anderen Abfällen aus der Lebensmittelindustrie, durch weniger bedenkliche Stoffe ersetzt. Der Zweck dieser Stoffe ist zum einen auf die Werterhaltung des eigentlichen Produktes gerichtet. Zum anderen aber soll auch deren hygienischer Zustand verbessert werden, bzw. eine verlängerte Haltbarkeit erzielt werden.

Es ist bekannt, dass Sorbinsäure zur Konservierung von Futtermitteln eingesetzt werden kann. Sorbinsäure (trans,trans-2,4-Hexadiensäure) ist eine farblose, feste Verbindung, die sich nur wenig in kaltem Wasser löst und weltweit als Konservierungsstoff verwendet wird. Das Wirkprinzip wird durch die Sorbinsäure in undissoziierter Form bestimmt. Die beste Wirkung entfaltet Sorbinsäure daher im sauren pH-Bereich. Sorbinsäure und ihre Salze besitzen eine sehr gute mikrobiostatische, antimykotische Wirkung. Gleichzeitig ist Sorbinsäure als ungesättigte Fettsäure praktisch ungiftig, was sehr umfangreiche Daten belegen, und durch die jahrzehntelange Anwendung dieser Säure im Lebensmittelbereich, in Tierfuttern u.a. belegt ist.

Es wurden früher Fütterungsversuche vor allem mit Ferkeln durchgeführt, die belegten, dass verschiedene organische Säuren, wie Zitronensäure, Fumarsäure oder Ameisensäure in der Lage sind, die tierischen Leistungen in positiver Weise zu beeinflussen, wenn sie in der optimalen Dosierung dem Ferkelfutter beigemischt werden (Zbl. Hyg. 191, 265 - 276 (1991), Kirchgessner und Roth; Journal of Animal and Feed Sciences, 7, 1998, 25 - 33, Roth und Kirchgessner). Diese Säuren wirken aber korrosiv und verursachen auf Grund ihrer Flüchtigkeit z. T. Geruchsbelästigungen und erfordern besondere Vorsicht im Umgang, wenn das Risiko einer aus Sicht des Gesundheitsschutzes unerwünschten inhalatorischen Aufnahme vermieden werden soll.

In jüngster Zeit konnte auch gezeigt werden, dass die Sorbinsäure in hohen Konzentrationen (1,2 - 2,4 % Sorbinsäure, bezogen auf das Futtermittel) eine nutritive Wirksamkeit für Aufzuchtferkel besitzt (J. Anim. Physiol. a. Anim. Nutr. 74 (1995), 235 - 242, Kirchgessner et al.). Auf der 6. Tagung Schweine- und Geflügelernährung (Tagungsband, S. 60/61, J. Rühle et al. ,Zur Wirkung von Ameisen-, Milch- und Sorbinsäure auf einige Leistungs- und Stoffwechselkenndaten beim Absetzferkel') wurde über die Wirkung unter anderem von Sorbinsäure als Leistungsförderer bei der Ferkelaufzucht berichtet. Im Vergleich zu Ameisen- und Milchsäure wurde bei Sorbinsäure die beste ergotrope Wirkung erreicht. Die Konzentration der Sorbinsäure pro kg Futtermittel betrug bei diesen Untersuchungen 0,185 Mol/kg (ca. 2,1 Gew.-%).

In Kraftfutter / Feed Magazine 2/99, S. 49ff (M. Freitag et al.) wird Sorbinsäure als leistungsfördernder Futtermittelzusatz ,im mittleren Konzentrationsbereich' beschrieben; bekannt sind Konzentrationsbereiche von 1,2 bis 2,4 Gew.-% Futtermittel (s. z.B. J. Anim. Physiol. a. Anim. Nutr. 74 (1995), 235 - 242, Kirchgessner et al.).

In der WO 00/36928 werden leistungsfördernde Futtermittelzusätze beschrieben, die C6-C10 Carbonsäuren oder Carbonsäuresalze enthalten. Diese Zusätze sind in den Futtermitteln in Mengen von 10 - 30 Gew.-% enthalten. Ungesättigte oder gar mehrfach ungesättigte Carbonsäuren sind dort nicht beschrieben, erste recht keine Sorbinsäure.

Enzyme werden zu verschiedenen Zwecken in Tierfuttermitteln eingesetzt (siehe z. B. Asian-Aus., J. Anim. Sci., 2000, Heft 13, Nr. 1, Seiten 86 bis 95). Zu nennen sind insbesondere Enzyme welche andere antinutritive Futterinhaltsstoffe so stark abbauen, dass eine erhöhte Verfügbarkeit anderer Nährstoffe erreicht wird (z.B.: Pentosanasen, β-Glucanasen). Außerdem soll eine Lockerung von Zellwandstrukturen mit dem Ziel einer Verdaulichkeitserhöhung von Zellwandbestandteilen erreicht werden (z.B.: Cellulasen, β-Glucosidasen, Phytase). Weiterhin kann durch den Zusatz von Enzymen zum Tierfutter eine quantitative Unterstützung von körpereigenen Enzymen und damit eine verbesserte Verdauung erreicht werden (z.B.: Lipasen, Amylasen und Glucoamylasen, Carboxypeptidasen, Trypsin, Chymotrypsin, Elastase, Proteasen, Peptidasen).

So zeigte ein Zusatz von Xylanase (Gdala, J. et al., Animal Feed Science Technology 65 /1997, 15 - 33) eine wesentlich verbesserte Verdaulichkeit von Xylose, Arabinose, Mannose in der Ferkelernährung. Igbasan, F.A. et al. (6. Tagung Schweine- und Geflügelernährung, 2000, Tagungsband, S. 71- 74) beschreiben in Ihren Untersuchungen Phytasen aus verschieden Bakterien wie Bacillus subtilis, Escherichia coli, welche eine bessere Aktivität als Pilzphytasen aufweisen.

Sorbinsäure als Futtermittelzusatz steigert zwar die Leistung in der Tierzucht hinsichtlich Zuwachsrate und Futterverwertung schon erheblich, die Verwertung der Futtermittel ist aber aufgrund des nach wie vor hohen Gehalts an nichtverdaulichen Bestandteilen noch nicht optimal. Es bestand das Bedürfnis nach einem Futtermittel mit leistungsfördernden Zusätzen ohne die Nachteile der heute üblicherweise verwendeten Stoffe fort.

Überraschenderweise wurde gefunden, dass durch Futtermittel, welche sowohl Sorbinsäure als auch Enzyme enthalten in der Nutztieraufzucht, insbesondere der Ferkelaufzucht eine weitere deutliche Leistungsverbesserung hinsichtlich Zuwachsrate und Futterverwertung erreicht werden kann.

Die Erfindung betrifft dementsprechend die gemeinsame Verwendung von Sorbinsäure als leistungsfördernder und/oder konservierender Zusatz zu Futtermitteln und von Enzymen und/oder Enzympräparaten als Zusatz zu derartigen Futtermitteln, die schwer- oder unverdauliche Inhaltsstoffe von Futtermitteln aufschließen und damit verwertbar machen oder Stoffe mit antinutritiver Wirkung ausschalten. Die Erfindung betrifft ferner ein Futtermittel zur Erzielung eines leistungsfördernden Effekts, welches Sorbinsäure sowie Enzyme enthält und/oder Enzyme enthaltende Produkte zur Herstellung von Futtermitteln.

Die Sorbinsäure wird in den Futtermitteln zweckmäßigerweise in Konzentrationen von >0 bis < 5,0 Gew.-% Futtermittel, vorzugsweise von 0,2 bis 3,0 Gew.-%, ganz besonders bevorzugt von 0,5 bis 2,0 Gew.-% zugesetzt.

Erfindungsgemäß werden unter dem Begriff Enzyme biologische Katalysatoren mit proteinogener Struktur verstanden, welche mit Hilfe von Mikroorganismen durch Fermentation oder aus Pflanzenteilen durch Extraktion oder Anreicherung gewonnen werden. Oft werden keine reinen Enzyme, sondern angereicherte Enzympräparate in Form von Mischungen in verschiedener Zusammensetzung und Aktivität gewonnen. Enzyme reagieren substratspezifisch, d.h. dass ein Enzym auch nur eine Substanz(klasse) angreifen kann. Beispielsweise kann das Enzym Phytase, Phytinsäure (durch die Abspaltung von Phosphatresten) angreifen; dadurch wird verwertbarer Phosphor freigesetzt und die chelatisierende Wirkung von Phytinsäure auf Ca-, Mg-, Fe- und Zn-lonen, die als Spurenelemente im Futter wichtig sind, unterbunden.

Bevorzugt werden die Enzyme aus den jeweiligen Klassen, welche eine hohe Lagerstabilität, breites pH- und Temperaturoptimum, Pelletierungsmöglichkeiten mit Tierfuttern und Aktivität während einer möglichen Passage bis zum Darmtrakt der Tiere verfügen.

Beispiele für erfindungsgemäß einsetzbare Enzyme/Enzympräparate sind (mit bevorzugter mind. Enzymaktivitäten/kg Futter):
- Phytase (Bei Schweinen/Ferkeln zweckmäßigerweise mind. 500 FTU*, bei Geflügel wie Legehennen, Puten zweckmäßigerweise mind. 300 FTU und anderen Geflügelarten zweckmäßigerweise mind. 500 FTU)
- Beta-Glucanasen (z.B. Endo-1,4-Beta-Glucanase, Endo-1,3(4)-Beta-Glucanase zweckmäßigerweise mit 400 bis 600 BGU **)
- Endo-1,4-Beta-Xylanase (zweckmäßigerweise mit 500 bis 850 EXU ***)
- Cellulasen (zweckmäßigerweise 900 bis 2000 Hemicellulaseaktivität ****
- Alpha-Amylase (zweckmäßigerweise mind. 250 Amylaseaktivität****)
- Alpha-Galactosidase (zweckmäßigerweise mind. 200 Galactosidaseaktivität **** )
- Pentosanasen (zweckmäßigerweise mind. 200 Pentosanaseaktivität ****)
- Beta- Glucosidasen (zweckmäßigerweise mind. 250 Glucosidaseaktivität ****)

* 1 FTU setzt 1 mmol anorganischen Phosphor/min aus 0,0051 mol/l Na-phytat, bei pH 5,5 und 37° C frei.
** 1 BGU setzt 0,278 µmol reduzierende Zucker (als Glucose-äquivalente)/min aus einer 0,5 %-igen β-Glucan Lösung bei pH 3,5 bei 40 ° C frei
*** 1 EXU setzt 1,0 µmol reduzierende Zucker (als Xylose-äquivalente)/min aus einer 1,0 %-igen Xylan-Lösung bei pH 3,5 bei 40 ° C frei
**** Standard FCC oder AATCC-Methoden.)

Weiterhin finden Anwendung Enzyme wie Glucoamylasen, Glucoseoxidasen, verschiedene Lipasen, Mannase (endo-1,4-β), Polygalacturonasen, Transglutaminasen und Xylanasen, verschiedener Aktivitäten und Einsatzkonzentrationen in Abhängigkeit von der Art der Tiere.

Es können aber auch Mischungen von Sorbinsäure und den oben genannten Enzymen/Enzympräparaten direkt im Tierfutter eingesetzt werden.

Werden die Enzyme getrennt von der Sorbinsäure eingesetzt, können diese auch an Trägern in gebundener Form oder als Mischung aus verschiedenen Herstellungsprozessen vorliegen.

Die Dosierungen der Enzyme oder Enzympräparate werden nach den vorliegenden Enzymaktivitäten ausgerichtet und dabei so gewählt, dass der erforderliche Aufschluss der Inhaltsstoffe oder die Inaktivierung unerwünschter Substanzen zuverlässig vor der Verfütterung oder einer evtl. Weiterverarbeitung erreicht sind.

Als Tierfuttermittel geeignet sind z. B. Grünfutter, Silagen, Trockengrünfutter, Wurzeln, Knollen, fleischige Früchte, Körner und Samen, Biertreber, Trester, Bierhefe, Destillationsschlempe, Müllereinebenerzeugnisse, Nebenerzeugnisse der Zucker-, Stärkeherstellung und Ölgewinnung und verschiedene Lebensmittelabfälle. Solchen Futtermitteln können bestimmte Futtermittelzusatzstoffe (z.B. Antioxidantien) oder Mischungen aus verschiedenen Substanzen (z.B. Mineralstoffmischungen, Vitaminmischungen) zu Verbesserung beigegeben werden. Spezielle Futtermittel werden auch für bestimmte Tierarten und deren Entwicklungsstadium angepasst. Dies ist beispielsweise bei Ferkelaufzuchtfutter in der Schweinehaltung der Fall. Weiterhin eignen sich Futtermittel mit dem erfindungsgemäßen Zusatz an Sorbinsäure und Enzymen/Enzympräparate für die Verfütterung an eine ganze Reihe weitere Nutz- und Heimtiere, z. B. Schweine, Kälber und Rinder, Lämmer und Schafe, Wild in Gehegehaltung, Geflügel, Pferde, Pelztiere und Heimtiere, insbesondere Nager.

Bei der Futtermittelherstellung geht man am besten so vor, dass man die Sorbinsäure direkt dem Tierfuttermittel, einzelnen seiner Bestandteile oder anderen zugesetzten Stoffen wie Futtermittelzusatzstoffen oder aber über Vormischungen verschiedener Bestandteile dem eigentlichen Futtermittel zusetzt. Zu diesen Bestandteilen gehören u. a. Mineralstoff-, Säure- und Vitaminmischungen, Geschmacksstoffpräparate, Ergänzungsfuttermittel, deren Mischungen sowie Mischungen derartiger Präparate mit Bestandteilen der Futtermittel. Sie können den Futtermitteln, einzelnen ihrer Bestandteile oder trocken dem Futter zugemischt werden, vor einer weiteren Verarbeitung (z.B. Extrusion, Pellettierung etc.) zugegeben werden bzw. im Gemisch dispergiert zudosiert werden. Dabei ist i.a. eine Pelletierung mit dem Futter bei Temperaturen bis zu ca. 75 °C angebracht. Muss bei höheren Temperaturen gearbeitet werden, so können die gelösten oder suspendierten Enzyme auf das Tierfutter auch in Kombination mit Sorbinsäure aufgesprüht werden. Dabei ist die schlechte Wasserlöslichkeit von Sorbinsäure zu beachten, so dass mit max. ca. 0,15 % Sorbinsäure in der Lösung gearbeitet werden kann. Wenn Sorbinsäure über einzelne Bestandteile des Futtermittels oder Vormischungen zugegeben wird, werden die Dosierungen dabei so gewählt, dass sich die erfindungsgemäßen Gehalte im Futtermittel ergeben.

Sorbinsäure liegt in fester Form vor. Sie kann dadurch problemlos in feste und pastöse Futtermittel eingearbeitet werden. Da die Löslichkeitsgrenze in wässrigen, auch nur leicht sauren Futtermitteln überschritten wird, wird zweckmäßigerweise Sorbinsäure geringer Korngröße eingesetzt, wobei mindestens 80 Gew.-% im Bereich unterhalb 555 µm, vorzugsweise sogar unterhalb 355 µm, liegen sollten, um eine möglichst gleichmäßige Verteilung zu erreichen.

Ebenso können Enzyme oder Enzympräparate den Futtermitteln, einzelnen ihrer Bestandteile oder dem Futter insgesamt zugemischt werden, vor einer weiteren Verarbeitung (z.B. Extrusion) zugegeben werden, sofern dabei nicht höhere Temperaturen auftreten, bzw. direkt, auf geeignete Trägermaterialien aufgezogen oder im Gemisch mit geeigneten Standardisierungsmitteln wie Lactose, Cellulose sowie andere oligo- und polymere Kohlenhydrate, zudosiert werden. Zweckmäßiger- aber nicht notwendigerweise werden die Enzyme oder Enzympräparate Futtermittelbestandteilen zugegeben, in denen die aufzuschließenden oder zu inaktivierenden Inhaltsstoffe enthalten sind. Das gilt insbesondere, wenn bei einer späteren Verarbeitung, z. B. durch Extrusion, höhere Temperaturen erreicht werden, bei denen die Enzyme inaktiviert werden können.

Überraschenderweise wird bei der kombinierten Anwendung von Sorbinsäure und Enzymen und/oder Enzympräparaten ein stärkerer leistungsfördernder Effekt als bei einzelnem Einsatz eines der beiden Zusätze allein erreicht. Beim Abbau höherermolekularer Futtermittelinhaltsstoffe zu niedermolekularen Substanzen werden die Entwicklungsmöglichkeiten für Mikroorganismen, auch Verderbserreger verbessert. Ein erwünschter Nebeneffekt des erfindungsgemäßen Zusatzes an Sorbinsäure ist deshalb die konservierende Wirkung, die eine Entwicklung dieser Verderbserreger von vornherein unterdrückt.

## Patentansprüche

1. Futtermittel enthaltend Sorbinsäure und mindestens ein zugesetztes Enzym und/oder Enzympräparat.

2. Futtermittel nach Anspruch 1, **dadurch gekennzeichnet, dass** die Konzentration der Sorbinsäure im Bereich von >0,0 bis 5,0 Gew.-% liegt.

3. Futtermittel nach Anspruch 1 oder 2, **dadurch gekennzeichnet, dass** das Enzym ausgewählt wird aus Phytase, Cellulase, Glucanase, Hemicellulase (Xylanase), Amylase, Galaktosidase, Pentosanase, Glucosidase, verschiedene Lipasen, Mannase (endo-1,4-β), Polygalacturonase, Transglutaminase und Mischungen derselben.

4. Verwendung eines Futtermittels nach Anspruch 1 in der Schweineaufzucht.

5. Verwendung eines Futtermittels nach Anspruch 1 in der Rinderaufzucht.

6. Verwendung eines Futtermittels nach Anspruch 1 in der Lämmeraufzucht.

7. Verwendung eines Futtermittels nach Anspruch 1 in der Geflügelaufzucht.

8. Verwendung einer Kombination von Sorbinsäure und mindestens einem zugesetzten Enzym zur Herstellung von Futtermitteln.

9. Verwendung nach Anspruch 8 zur Herstellung von Futtermitteln mit leistungsfördernder Wirkung.

10. Futtermittelzusatz, enthaltend Sorbinsäure und mindesten ein Enzym und/oder Enzympräparat.

11. Futtermittelzusatz nach Anspruch 10, wobei Sorbinsäure und Enzym getrennt voneinander vorliegen.
